# EUROPÄISCHE PATENTANMELDUNG

(11) **EP 4 660 448 A1**
(43) Veröffentlichungstag der Anmeldung: **10.12.2025**
(21) Anmeldenummer: 24214672.8
(22) Anmeldetag: 22.11.2024
(51) Int. Cl.: F03D 5/04, F03D 9/25, F03D 9/17, F03D 9/32

(54) **ENERGIEBEREITSTELLUNGSSYSTEM FÜR MOBILE UND FÜR STATIONÄRE GEGENSTÄNDE**

(30) Priorität: 07.06.2024 WO PCT/EP2024/065726
(71) Anmelder: Die Philosophische Praxis e. K., 23570 Lübeck (DE)
(72) Erfinder: Philipsen, Michaela, 23570 Fahrenberg (DE)
(74) Vertreter: Grünbaum, Annekathrin

(57) **Zusammenfassung**

Die Erfindung betrifft ein Energiebereitstellungssystem für mobile und für stationäre Gegenstände.

Es ist daher Aufgabe der Erfindung die Nachteile des Standes der Technik zu beseitigen und ein alternatives Energiebereitstellungssystem für mobile und für stationäre Gegenstände bereitzustellen. Das erfindungsgemäße Energiebereitstellungssystem für mobile und für stationäre Gegenstände zielt darauf ab, eine primäre elektrische Energiebereitstellung von mobilen und stationären Gegenständen zu unterstützen, um eine Betriebsdauer der primären elektrischen Energiebereitstellung zu verlängern und eine damit assoziierte benötigte Speicherkapazität elektrischer Energie zu reduzieren.

Die Lösung dieser Aufgabe erfolgt durch die in den Ansprüchen aufgeführten Merkmale.

## Beschreibung

Die Erfindung betrifft ein Energiebereitstellungssystem für mobile und für stationäre Gegenstände.

### Darstellung der Erfindung

Es ist Aufgabe der Erfindung die Nachteile des Standes der Technik zu beseitigen und ein alternatives Energiebereitstellungssystem für mobile und für stationäre Gegenstände bereitzustellen. Das erfindungsgemäße Energiebereitstellungssystem für mobile und für stationäre Gegenstände zielt darauf ab, eine primäre elektrische Energiebereitstellung von mobilen und stationären Gegenständen zu unterstützen, um eine Betriebsdauer der primären elektrischen Energiebereitstellung zu verlängern und eine damit assoziierte benötigte Speicherkapazität elektrischer Energie zu reduzieren.

Die Lösung dieser Aufgabe erfolgt durch die in den Ansprüchen aufgeführten Merkmale.

### Ausführung der Erfindung

Die Erfindung wird anhand eines/mehrerer Ausführungsbeispiels näher erläutert. Hierzu zeigen
Figur 1 Energiebereitstellungssystem für mobile und für stationäre Gegenstände (Draufsicht),
Figur 2 Segelinduktionssystem mobil (Draufsicht),
Figur 3 Segelinduktionssystem stationär (lateral),
Figur 4 Energiebereitstellungssystem für mobile und für stationäre Gegenstände mit Vorrichtung zur manuellen Aktivierung des Propellersystems manuell (Draufsicht),
Figur 5 Energiebereitstellungssystem für mobile und für stationäre Gegenstände mit Luftpumpe (lateral),
Figur 6 Energiebereitstellungssystem für mobile und für stationäre Gegenstände mit Windenergiesystem mit Induktionssystem als integraler Bestandteil des Induktionskreises eines Elektromotors (Draufsicht).

In der Beschreibung wird auf die beigefügten Zeichnungen Bezug genommen, in denen zur Veranschaulichung spezifische Ausführungsformen gezeigt sind, in denen die erfindungsgemäße Anordnung ausgeübt werden kann. In dieser Hinsicht wird eine Richtungsterminologie wie etwa "oben", "unten" usw. mit Bezug auf die Orientierung der beschriebenen Zeichnungen verwendet. Die Richtungsterminologie dient der Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

Das Energiebereitstellungssystem für mobile und für stationäre Gegenstände weist zumindest ein Luftpumpsystem, zumindest ein Windenergiesystem und zumindest einen Windkanal auf. Das zumindest eine Luftpumpsystem ist fluidisch mit dem zumindest einen Windenergiesystem verbunden. Das zumindest eine Windenergiesystem ist innerhalb des zumindest einen Windkanals und/oder an dem zumindest einen Windkanal und/oder innerhalb des zumindest einen Luftpumpsystems und/oder an dem zumindest einen Luftpumpsystem angeordnet. Das zumindest eine Windenergiesystem weist zumindest ein Segelinduktionssystem auf. Das zumindest eine Segelinduktionssystem ist dafür eingerichtet, Windenergie aus zumindest einem Luftstrom in elektrische Energie und/oder in mechanische Energie zu wandeln.

Der mobile und stationäre Gegenstand kann im Wesentlich jeder Gegenstand sei, für welchen die Bereitstellung elektrischer und/oder mechanischer Energie sinnvoll bzw. notwendig ist. Es entsprechender mobiler Gegenstand kann beispielsweise ein Kraftfahrzeug oder ein Fluggerät sein. Ein entsprechender stationäre Gegenstand, welcher zumindest temporär auf einem entsprechenden mobilen Gegentand gelagert sein kann, kann beispielsweise ein Energiebereitstellungseinrichtung in Form eines Stromaggregats sein.

Das zumindest eine Luftpumpsystem kann jedes System gemäß dem Stand der Technik sein, welches dafür eingerichtet ist, einen Luftstrom zu erzeugen. Hierfür weist das zumindest eine Luftpumpsystem zumindest eine Fluidenergiemaschine auf, welche einem eingeschlossenen Gas, hier im Speziellen Umweltluft, mechanische Arbeit zuführt. Das eingeschlossene Gas wird somit transportiert, wobei es zuvor verdichtet werden kann. Eine solche Fluidenergiemaschine kann dementsprechend beispielsweise ein Verdichter (Kompressor) und/oder ein Ventilator und/oder ein Gebläse sein. Eine solche Fluidenergiemaschine kann aber auch andersartig ausgebildet sein, sofern sie zumindest über eine Einrichtung verfügt, welche dafür ausgebildet ist, ein eingeschlossenes Gas zu dem zumindest einen Windenergiesystem zu transportieren. Hierbei kann das zumindest eine Luftpumpsystem manuell und/oder elektrisch betreibbar sein. Vorteilhafte Ausführungsformen des zumindest einen Luftpumpsystems sind der Patentanmeldung PCT/EP2024/063673 zu entnehmen. Ein entsprechendes Luftpumpsystem weist zumindest eine Kammer auf. Die zumindest eine Kammer weist an gegenüberliegenden Seiten jeweils zumindest eine luftdurchlässige Öffnung auf. Die zumindest eine Kammer weist ferner ein beweglich gelagertes, Luft-komprimierendes Element auf. Das Luft-komprimierende Element ist derart beweglich gelagert, dass eine Bewegung des Luft-komprimierenden Elements an einer ersten Seite des Luft-komprimierenden Elements einen Überdruck, und an einer der ersten Seite des Luft-komprimierenden Elements gegenüberliegenden Seite einen Unterdruck erzeugt.

Das zumindest eine Windenergiesystem ist in dem zumindest einen Windkanal und/oder innerhalb des zumindest einen Luftpumpsystems angeordnet. Das zumindest eine Windenergiesystem kann jede Einrichtung gemäß dem Stand der Technik aufweisen, welche dafür eingerichtet ist, eine Bewegungsenergie eines Luftstroms in elektrische Energie zu wandeln. Aus dem Stand der Technik sind hierfür beispielsweise Einrichtungen mit klassischen, sich um eine horizontale Achse drehende, Rotoren/Propellern, aber auch Einrichtungen mit horizontal oder vertikal angeordneten Savonius-Rotoren, Darrieus-Rotoren oder H-Rotoren. Vorteilhafte Ausführungsformen des zumindest einen Windenergiesystems sind der Patentanmeldung PCT/EP2024/063673 zu entnehmen. Es ist klar, dass das zumindest eine Windenergiesystem zur Wandlung der Bewegungsenergie eines Luftstroms in elektrische Energie zumindest einen Generator aufweisen kann und/oder mit zumindest einer Einrichtung zur Energiewandlung wirkverbunden ist. Das zumindest eine Windenergiesystem weist ferner oder ausschließlich zumindest ein Segelinduktionssystem auf. Das erfindungsgemäße zumindest eine Segelinduktionssystem, welches im Folgenden näher beschrieben wird, ist entsprechend zuvor benannter Einrichtungen dafür eingerichtet, die Bewegungsenergie eines Luftstroms in elektrische Energie zu wandeln. Hierdurch bereitgestellte Energie kann direkt an einen elektrischen Verbraucher, beispielsweise einen Elektromotor, weitergeleitet, oder aber in einem Akkumulator gespeichert werden.

Der zumindest eine Windkanal dient dazu, den zumindest einen Luftstrom in Richtung des zumindest einen Windenergiesystems zu lenken. Hierfür ist der zumindest eine Windkanal vorteilhafterweise integraler Bestandteil des Energiebereitstellungssystem für mobile und für stationäre Gegenstände, beispielsweise in Form eines Windkanals zur Kühlung elektrischer und/oder mechanischer Komponenten und/oder in Form eines Windkanals zur Bereitstellung eines vorteilhaften aerodynamischen Verhaltens und/oder in Form einen Windkanals zur Bereitstellung von Frischluft für einen Fahrgastraum.

Gemäß verschiedener Ausführungsformen weist das Energiebereitstellungssystem für mobile und für stationäre Gegenstände zumindest ein Luftstromregulationssystem auf. Das zumindest eine Luftstromregulationssystem ist dazu eingerichtet, den zumindest einen Luftstrom effektiv und effizient dem zumindest einen Windkanal und/oder dem zumindest einen Windenergiesystem und/oder dem zumindest einen Luftpumpsystem und/oder zumindest einem anderen Bestandteil des Energiebereitstellungssystems für mobile und für stationäre Gegenstände zuzuführen. Das Luftstromregulationssystem ist außerdem darauf eingerichtet, die Richtung und/oder die Stärke des zumindest einen Luftstroms zu dem zumindest einen Windenergiesystem und/oder zu dem zumindest einen Luftpumpsystem und/oder in dem zumindest einen Luftpumpsystem und/oder zu zumindest einen und/oder in zumindest einem Bestandteil des Energiebereitstellungssystems für mobile und für stationäre Gegenstände zu regulieren. Regulieren kann hierbei beispielsweise eine Anpassung des Luftstroms bzgl. seiner Richtung, Intensität und/oder zeitlichen Verfügbarkeit sein. In einfachster Ausführungsform ist das zumindest eine Luftstromregulationssystem durch den zumindest einen Windkanal gebildet, wobei der zumindest eine Windkanal den zumindest einen Luftstrom lenkt, beispielsweise in Richtung des zumindest einen Windenergiesystems. Hierfür kann das zumindest eine Luftstromregulationssystem richtungsweisende Elemente aufweisen, welche beispielsweise als Prellbleche innerhalb des zumindest einen Windkanals ausgebildet sein können. Das zumindest eine Luftstromregulationssystem kann aber auch zumindest eine zu öffnende und zu schließende Schleuse aufweisen, um die Menge/Intensität des Luftstroms, welcher das zumindest eine Luftstromregulationssystem passiert, zu einem bestimmten Zeitpunkt zu regulieren. Hierfür kann das zumindest eine Luftstromregulationssystem entsprechende Sensorik, beispielsweise Luftwiderstandsmesser, Luftdruckmesser, Geschwindigkeitssensoren etc. aufweisen.

Gemäß verschiedener Ausführungsformen weist das zumindest eine Segelinduktionssystem zumindest ein bewegliches Segel, zumindest ein induzierendes Element und/oder zumindest ein induktives Element auf. Das zumindest eine bewegliche Segel ist form- und/oder richtungsveränderlich mit dem zumindest einen induzierenden Element und/oder mit dem zumindest einen induktiven Element verbunden. Eine Form und/oder eine Ausrichtung des zumindest einen beweglichen Segels ist an dem zumindest einen Luftstrom ausrichtbar. Der zumindest eine Luftstrom bewirkt eine Bewegung des zumindest einen induzierenden Elements und/oder des zumindest einen induktiven Elements. Das zumindest eine induzierende Element und/oder das zumindest eine induktive Element ist mit dem jeweils korrespondierenden Element wirkverbunden. Die Bewegung des zumindest einen induzierenden Elements und/oder des zumindest einen induktiven Elements erzeugt eine elektrische Spannung.

Gemäß verschiedener Ausführungsformen ist das zumindest eine Segelinduktionssystem als Führungssystem mit zumindest einer Führschiene ausgebildet. Das zumindest eine induzierende Element und/der das zumindest eine induktive Element ist/sind entlang der zumindest einen Führschiene beweglich mit dem Führungssystem verbunden. Die zumindest eine Führschiene weist das jeweils korrespondierende Element auf.

Gemäß verschiedener Ausführungsformen ist die zumindest eine Führschiene formveränderlich und bildet wahlweise eine lineare oder eine zickzackförmige Führung aus.

Gemäß verschiedener Ausführungsformen weist das Energiebereitstellungssystem für mobile und für stationäre Gegenstände ferner zumindest eine Vorrichtung zur manuellen Aktivierung des zumindest einen Luftpumpsystems und/oder des zumindest einen Windenergiesystems auf. Die zumindest eine Vorrichtung zur manuellen Aktivierung ist fluidisch und/oder mechanisch mit dem zumindest einen Luftpumpsystem und/oder dem zumindest einen Windenergiesystem verbunden.

Gemäß verschiedener Ausführungsformen weist das Energiebereitstellungssystem für mobile und für stationäre Gegenstände ferner zumindest ein Ladeventil zur manuellen und/oder zur automatischen Aktivierung des zumindest einen Windenergiesystems und/oder des zumindest einen Luftpumpsystems und/oder zumindest einer anderen Einrichtung des Energiebereitstellungssystems für mobile und für stationäre Gegenstände auf. Das Ladeventil ist dafür eingerichtet mit einer manuell und/oder maschinell betriebenen Vorrichtung zur Erzeugung eines Luftstroms verbunden zu werden.

Gemäß verschiedener Ausführungsformen weist das Energiebereitstellungssystem für mobile und für stationäre Gegenstände ferner zumindest ein Komprimierungs- und Verstärkersystem auf. Das zumindest eine Komprimierungs- und Verstärkersystem ist mittels einer ersten mechanischen Welle mit dem zumindest einen Windenergiesystem wirkverbunden. Das Komprimierungs- und Verstärkersystem ist dafür eingerichtet, mechanische Energie der ersten mechanischen Welle auf zumindest zwei zweite mechanische Wellen zu übertragen. Die zumindest zwei zweiten mechanischen Wellen sind mit zumindest einem Generator oder mit zumindest einer anderen Einrichtung des Energiebereitstellungssystems für mobile und für stationäre Gegenstände wirkverbunden.

Das zumindest eine Windenergiesystem erzeugt eine mechanische Leistung, beispielsweise in Form einer durch den Luftstrom induzierten Rotation einer Welle eines Propellersystems. Das Komprimierungs- und Verstärkersystem komprimiert eine entsprechende mechanische Leistung des zumindest einen Windenergiesystems auf eine erste mechanische Welle (Komprimierungswelle) und überträgt diese komprimierte mechanische Leistung auf die zumindest zwei zweiten mechanischen Wellen (Verstärkerwellen), welche jeweils mit dem zumindest einen Generator oder mit zumindest einer anderen Einrichtung zur Energiewandlung und/oder zur Energiespeicherung wirkverbunden sind. Der zumindest eine Generator oder die zumindest eine andere Einrichtung zur Energiewandlung und/oder zur Energiespeicherung können eigenständig oder integrale Bestandteile des Energiebereitstellungssystems für mobile und für stationäre Gegenstände sein.

Gemäß verschiedenen Ausführungsformen ist das Komprimierungs- und Verstärkersystem mit zumindest einer Einrichtung des Energiebereitstellungssystems für mobile und für stationäre Gegenstände derart wirkverbunden, dass die Bewegungsenergie der zumindest einen Einrichtung auf das Komprimierungs- und Verstärkersystem übertragen wird, wobei das Komprimierungs- und Verstärkersystem die Bewegungsenergie zumindest einer zweiten Einrichtung des Energiebereitstellungssystems für mobile und für stationäre Gegenstände zuführt, welche die Bewegungsenergie in elektrische Energie wandelt.

Vorteilhafte Ausführungsformen des zumindest einen Komprimierungs- und Verstärkersystems sind außerdem der Patentanmeldung PCT/EP2024/063673 zu entnehmen.

Gemäß verschiedener Ausführungsformen weist der zumindest eine Windkanal zumindest eine zu öffnende und zu schließende Windklappe zur Aufnahme des zumindest einen Luftstroms auf. Die zumindest eine zu öffnende und zu schließende Windklappe ist fluidisch mit dem zumindest einen Windenergiesystem verbunden. Der zumindest eine Windkanal ist einwegig oder mehrwegig.

Das zumindest eine Windenergiesystem, welches fluidisch mit dem zumindest einen Luftpumpsystem verbunden ist, kann mittels des durch das zumindest eine Luftpumpsystem erzeugten Luftstroms betrieben werden. Das zumindest eine Windenergiesystem kann aber auch, ausschließlich oder zusätzlich, mittels zumindest eines anderen Luftstroms betrieben werden. Der zumindest andere Luftstrom kann beispielsweise von einem externen Luftpumpsystem und/oder einem meteorologischen Wind (wahrer Wind) und/oder einem durch eine Bewegung des mobilen Gegenstands hervorgerufenen Fahrtwind (scheinbarer Wind) resultieren. Zur Aufnahme des anderen Luftstroms weist der zumindest eine Windkanal zumindest eine zu öffnende und zu schließende Windklappe auf, welche fluidische mit dem zumindest einen Windenergiesystem verbunden ist, und/oder ein Ladeventil, über das dem zumindest einen Windkanal ein Luftstrom zugeführt werden kann und/oder eine zu öffnende und zu schließende Ausfuhrklappe 90, durch die das zumindest eine Windenergiesystem für die Aufnahme eines externen Luftstroms, beispielsweise meteorologischer und/oder scheinbarer Wind, elektronisch oder manuell in den Außenbereich des Energiebereitstellungssystems für mobile und für stationäre Gegenstände geführt werden kann.

Vorteilhafterweise ist der zumindest eine Windkanal mehrwegig ausgebildet. Beispielsweise kann sich der zumindest eine Windkanal hinter der zumindest einen zu öffnenden und zu schließenden Windklappe in zwei oder mehrere Kanäle aufteilen, welche jeweils ein oder mehrere Einrichtung(en) zur Wandlung von der Bewegungsenergie eines Luftstroms in elektrische Energie aufweisen können. Hierbei kann die zumindest eine zu öffnende und zu schließende Windklappe beispielsweise automatisiert entsprechend einer Luftstromstärke geöffnet oder geschlossen werden. So kann ein Schließen bei einer zu geringen (keine Wirkung) oder zu hohen (destruktiv) Luftstromstärke vorteilhaft sein. Der zumindest eine Windkanal kann aber auch derart mehrwegig ausgebildet sein, dass er beispielsweise an gegenüberliegenden Seiten des mobilen oder stationären Gegenstands (bspw. Front und Heck) eine Öffnung aufweist, welche die zumindest eine zu öffnende und zu schließende Windklappe aufweisen können. Eine derartig mehrwegige Ausgestaltung des zumindest einen Windkanals erlaubt es einem Luftstrom, den mobilen oder stationären Gegenstand ohne wesentlichen bremsenden Effekt nach einem Passieren des zumindest einen Windkanals zu verlassen. Ferner erlaubt dies einem Luftstrom, den zumindest einen Windkanal von zumindest zwei Seiten zu passieren, beispielsweise um dem zumindest einen Windenergiesystem auch bei einer rückwärts gerichteten Bewegung des mobilen oder stationären Gegenstands einen Luftstrom zuzuführen.

Gemäß verschiedener Ausführungsformen weist das zumindest eine Luftpumpsystem zumindest ein Induktionssystem auf. Das zumindest eine Induktionssystem ist im oder an dem zumindest einen Luftpumpsystem angeordnet. Die Bewegung zumindest eines Luft-komprimierenden Elements des zumindest einen Luftpumpsystem erzeugt eine elektrische Spannung.

Neben dem Segelinduktionssystem kann das zumindest eine Luftpumpsystem zumindest ein Induktionssystem aufweisen. Hierfür weist das zumindest eine Luft-komprimierende Element des zumindest einen Luftpumpsystems zumindest ein induzierendes oder zumindest ein induktives Element auf. Zumindest ein jeweils korrespondierendes Element ist entlang einer Bewegungsrichtung des zumindest einen Luft-komprimierenden Elements angeordnet und mit dem zumindest einen induzierenden oder dem zumindest einen induktiven Element des zumindest einen Luft-komprimierende Elements wirkverbunden. Während das zumindest eine Luft-komprimierende Element sich bewegt und der Luft mechanische Arbeit zuführt, d.h. die Luft transportiert, wird eine elektrische Spannung erzeugt und somit Bewegungsenergie in elektrische Energie gewandelt. Die gewandelte Energie kann direkt einem oder mehreren elektrischen Verbrauchern zugeführt, oder gespeichert werden. Vorteilhafte Ausführungsformen des zumindest einen Luftpumpsystems mit zumindest einem Induktionssystem sind der Patentanmeldung PCT/EP2024/063673 zu entnehmen.

Gemäß verschiedener Ausführungsformen weist das Energiebereitstellungssystem für mobile und für stationäre Gegenstände ferner zumindest einen Motor auf. Ein Induktionskreis des zumindest einen Motors wird durch das zumindest eine Segelinduktionssystem des zumindest einen Windenergiesystems und/oder durch das zumindest eine Induktionssystem des zumindest einen Luftpumpsystems und/oder durch zumindest ein Induktionssystem zumindest eines anderen Windenergiesystems bereitgestellt.

Gemäß verschiedener Ausführungsformen weist das Energiebereitstellungssystem für mobile und für stationäre Gegenstände ferner zumindest eine Einrichtung zur Luftreinigung auf. Die zumindest eine Einrichtung zur Luftreinigung ist dafür eingerichtet, zumindest einen Schadstoff aus dem zumindest einen Luftstrom abzureichern.

Gemäß verschiedener Ausführungsformen ist der zumindest eine Schadstoff CO₂. Die zumindest eine Einrichtung zur Luftreinigung ist dafür eingerichtet, das abgereicherte CO₂ in konzentrierter Form zu speichern und freizugeben.

Gemäß verschiedener Ausführungsformen weist das Energiebereitstellungssystem für mobile und für stationäre Gegenstände ferner zumindest eine Einrichtung zur Herstellung von E-Fuel auf. Die zumindest eine Einrichtung zur Herstellung von E-Fuel weist zumindest einen Elektrolyseur zur Herstellung von H₂ aus Wasser und/oder einen H₂-Tank auf. Die zumindest eine Einrichtung zur Herstellung von E-Fuel ist dafür ausgebildet, das abgereicherte und konzentrierte CO₂ von der zumindest einen Einrichtung zur Luftreinigung zu empfangen. Die zumindest eine Einrichtung zur Herstellung von E-Fuel ist dafür ausgebildet, zumindest einen E-Fuel aus H₂ und CO₂ zu synthetisieren.

Die zumindest eine Einrichtung zur Luftreinigung ist im fluid- und aerotechnischen Sinne eine Vorrichtung zur Trennung von Medien und kann als Filter oder Filtersystem ausgebildet sein. Die Luftreinigung kann ein- oder mehrstufig erfolgen. Beispielsweise kann zumindest ein Grobfilter die Luft von groben Verschmutzungen wie Pollen aber auch Insekten u.ä. reinigen. An den zumindest einen Grobfilter kann sich zumindest ein Feinfilter anschließen, um beispielsweise Feinstaubpartikel zu filtern. Derartig gefilterte Luft reduziert die Wahrscheinlichkeit eines mechanischen Defekts des Energiebereitstellungssystems für mobile und für stationäre Gegenstände. An den zumindest einen Feinfilter kann sich zumindest ein chemischer Filter, beispielsweise ein Absorptions- und/oder Adsorptionsfilter anschließen, welcher für einen Schadstoff oder mehrere Schadstoffe spezifisch ausgebildet sein kann. Dieser Schadstoff kann beispielsweise CO₂, aber auch CO, NOₓ, SO₂ oder jede andere Luftschadstoff sein. Der zumindest eine chemische Filter kann einer Vorrichtung zum Direct Air Capture von CO₂ entsprechen.

Die zumindest eine Einrichtung zur Luftreinigung kann dafür eingerichtet sein, den abgereicherten Schadstoff in konzentrierter Form zu speichern und freizugeben. Beispielsweise kann so das mittels Direct Air Capture aus der Luft gefilterte CO₂ bereitgestellt werden, um daraus mittels einer geeigneten Vorrichtung, eine Anlage zur Raffinage, E-Fuel herzustellen. Hierfür kann das Energiebereitstellungssystem für mobile und für stationäre Gegenstände zumindest eine Einrichtung zur Herstellung von E-Fuel aufweisen, welche dafür ausgebildet ist, zumindest einen E-Fuel aus H₂ und CO₂ zu synthetisieren. Der zumindest eine E-Fuel kann in einem etwaig vorhandenen Motor verbrannt oder mittels einer etwaig vorhandenen Brennstoffzelle in elektrische Energie umgewandelt werden. Alternativ kann der zumindest eine E-Fuel in einem entsprechenden Tank gespeichert werden, um ihn entweder zu einem anderen Zeitpunkt umzusetzen oder für andere Applikationen bereitzustellen.

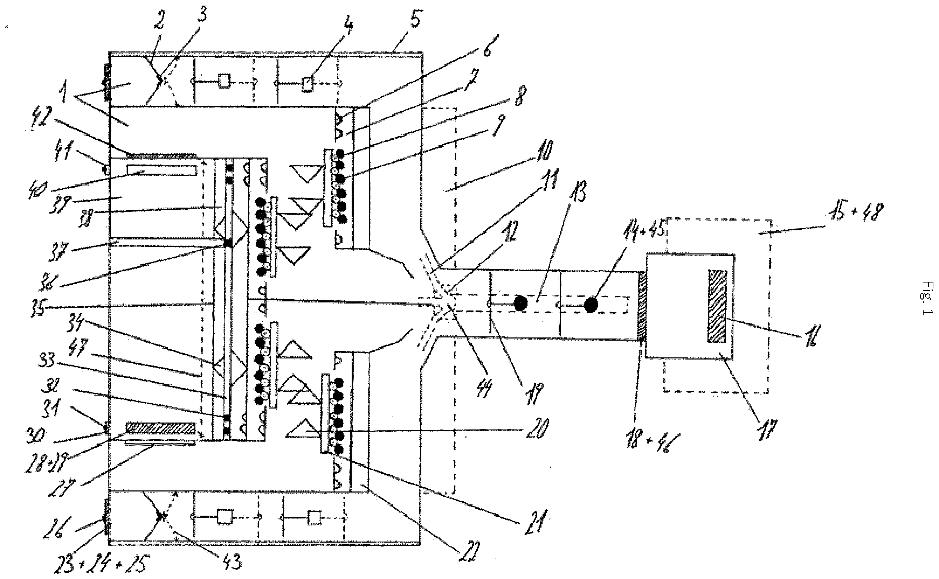

Das erfindungsgemäße Energiebereitstellungssystem für mobile und für stationäre Gegenstände ist nunmehr grafisch in den Figuren 1 bis 6 dargestellt.

Figur 1 zeigt eine mögliche Ausführungsform des Energiebereitstellungssystems für mobile und für stationäre Gegenstände in Draufsicht. Das Energiebereitstellungssystem für mobile und für stationäre Gegenstände gemäß Figur 1 weist ein Luftpumpsystem, ein Windenergiesystem und einen inneren und einen äußeren Windkanal 1 auf.

Das Luftpumpsystem wird gebildet aus einer länglichen, kastenförmigen und luftdichten Luftkompressionskammer 39. Die Luftkompressionskammer 39 ist gebildet aus einer Luftkompressionswand 37, mindestens einer Führschiene Luftkompressionswand 35, entlang welcher/welchen sich die Luftkompressionswand 37 entlang einer Bewegungsrichtung Luftkompressionswand 47 bewegt, zwei Luftzufuhrklappen (27, 42), vier Luftzufuhrschächten (28, 30, 40, 41), wobei am vierten Luftzufuhrschacht 41 (geschlossen) und am zweiten Luftzufuhrschacht 30 (geöffnet) jeweils ein Ladeventil 31 angeordnet ist und wobei am ersten Luftzufuhrschacht 28 (geöffnet) und am dritten Luftzufuhrschacht 40 (geschlossen) jeweils eine Verschlussklappe 29 angeordnet ist. Die Luftkompressionswand 37 entspricht dem beweglich gelagerten, Luft-komprimierenden Element. Einzelne oder sämtliche Komponenten des Luftpumpsystems können mehrfach vorgesehen sein. Die Luftkompressionswand 37 unterteilt die Luftkompressionskammer 39 in zwei luftundurchlässige Bereiche, einer ersten und zweiten Seite des Luft-komprimierenden Elements. In beiden Bereichen befindet sich Luft. Die Luftkompressionswand 37 bewegt sich, während des Betriebs des Luftpumpsystems, elektronisch an oder auf der Führschiene Luftkompressionswand 35 entlang der Bewegungsrichtung Luftkompressionswand 47 kontinuierlich zwischen der zweiten Luftzufuhrklappe 42 (geöffnet) und der ersten Luftzufuhrklappe 27 (geschlossen) hin und her. In der Phase, in der sich die Luftkompressionswand 37 Richtung zweiter Luftzufuhrklappe 42 bewegt, schiebt die Luftkompressionswand 37 die im Bereich zwischen Luftkompressionswand 37 und zweiter Luftzufuhrklappe 42 vorhandene Luft Richtung zweiter Luftzufuhrklappe 42.

In der Phase, in der sich die Luftkompressionswand 37 Richtung erster Luftzufuhrklappe 27 bewegt, schiebt die Luftkompressionswand 37 die im Bereich zwischen Luftkompressionswand 37 und erster Luftzufuhrklappe 27 vorhandene Luft Richtung erster Luftzufuhrklappe 27. Die Führschiene Luftkompressionswand 35 ist an den Seiten, im Bodenbereich und/oder im Deckenbereich der Luftkompressionskammer 39 installiert und bildet eine luftdichte Verbindung der Luftkompressionswand 37 mit den Innenwänden der Luftkompressionskammer 39. Die Luftkompressionskammer 39 ist luftdicht von dem an die Luftkompressionskammer 39 angrenzenden Windkanal 1 abgegrenzt. Die Luftzufuhrklappen 42, 27 bilden die Durchgangsöffnungen zwischen Luftkompressionskammer 39 und Windkanal 1. Die Luftzufuhrklappen 42, 27 können elektronisch geöffnet und geschlossen werden. Die Luftzufuhrklappen 42, 27 öffnen und schließen vorzugsweise jalousie-, muschel-, oder wirbelförmig. Die Luftzufuhrklappen 42, 27 können einen Luftwiderstandsmesser aufweisen (hier nicht dargestellt), welcher zur Regulation der Offen- und Schließbewegungen der Luftzufuhrklappen 42, 27 beiträgt und an eine Steuerungselektronik gekoppelt ist. Eine Reglung betrifft das spezifische Zusammenwirken der Komponenten des Luftpumpsystems in Abhängigkeit eines Leistungsbedarfs. Während der Phase, in der sich die Luftkompressionswand 37 auf die zweite Luftzufuhrklappe 42 zubewegt, öffnet sich die zweite Luftzufuhrklappe 42. Durch die Bewegung der Luftkompressionswand 37 wird die in der Luftkompressionskammer 39 im Bereich zwischen Luftkompressionswand 37 und zweiter Luftzufuhrklappe 42 vorhandene Luft über die zweite Luftzufuhrklappe 42 in den Windkanal 1 gepresst. Während der Phase, in der sich die Luftkompressionswand 37 auf die erste Luftzufuhrklappe 27 zubewegt, öffnet sich die erste Luftzufuhrklappe 27. Durch die Bewegung der Luftkompressionswand 37 wird die in der Luftkompressionskammer 39 im Bereich zwischen Luftkompressionswand 37 und erster Luftzufuhrklappe 27 vorhandene Luft über die erste Luftzufuhrklappe 27 in den Windkanal 1 gepresst. Die Luftzufuhrschächte 40, 28 sind in der Decke und/oder im Boden der Luftkompressionskammer 39 im Bereich nahe den Luftzufuhrklappen 42, 27 installiert und bilden eine Fluidverbindung zwischen Luftkompressionskammer 39 und der Umweltluft. Die Luftzufuhrschächte 40, 28 können durch eine Verschlussklappe 29 elektronisch geöffnet und geschlossen werden und weisen vorteilhafterweise Mittel zur Luftreinigung, zumindest im Sinne von mechanischen Grobfiltern und Staubfiltern auf, um ein Eindringen von Partikeln in die Luftkompressionskammer 39 zu verhindern. Während der Phase, in der sich die Luftkompressionswand 37 auf die zweite Luftzufuhrklappe 42 zu bewegt und an dem ersten Luftzufuhrschacht 28 vorbeigefahren ist, öffnet sich die Verschlussklappe 29 des ersten Luftzufuhrschachts 28, so dass Umweltluft in den Bereich zwischen erster Luftzufuhrklappe 27 und Luftkompressionswand 37 in die Luftkompressionskammer 39 einströmt. Die erste Luftzufuhrklappe 27 und der dritte Luftzufuhrschacht 40 sind in dieser Phase geschlossen. Durch das Öffnen der Verschlussklappe 29 wird zum einen dem Entstehen eines Vakuums in der Luftkompressionskammer 39 vorgebeugt. Zum anderen wird neue Luft in die Luftkompressionskammer 39 eingezogen. Selbe Ausführungen gelten entsprechend für eine Bewegung der Luftkompressionswand 37 in Richtung der ersten Luftzufuhrklappe 27.

An dem Luftpumpsystem ist ein Induktionssystem angeordnet. Das Induktionssystem gemäß Figur 1 ist gebildet aus einer Induktionskammer 38, an dessen Enden jeweils zwei Magnete 6 angeordnet sind, welche in der Induktionskammer 38 ein Magnetfeld erzeugen. Das Magnetfeld wird durch zwei Magnetfeldverstärker 34 verstärkt. Entlang der Induktionskammer 38 sind vier Induktionsspulen 32 angeordnet, welche mittels eines Induktionsantriebsgewindes 33 miteinander verbunden sind. Das Induktionsantriebsgewinde 33 ist wiederum mittels eines gezahnten Kugellagers 36 mit der Luftkompressionswand 37 verbunden. Die Bewegung der Luftkompressionswand 37 resultiert in einer Bewegung des Induktionsantriebsgewindes 33 und damit verbundener Induktionsspule 32, deren Bewegung im Magnetfeld der Induktionskammer 38 eine elektrische Spannung erzeugt. Sollte keine elektrische Energie zum Betrieb der Luftkompressionswand 37 zur Verfügung stehen, kann an die Ladeventile 31 eine externe Luftpumpe angeschlossen werden, welche elektrisch oder manuell betrieben werden kann. Eine zwischen den beiden Ladeventilen 31 alternierende Bereitstellung eines Luftstroms führt zu einer Bewegung der Luftkompressionswand 37 und einer Erzeugung elektrischer Spannung im Induktionssystem des Luftpumpsystem. Die Ladeventile 31 dienen somit einem zumindest teilweisen Laden einer Batterie 81 (hier nicht gezeigt), beispielsweise um mit dem mobilen oder stationären Gegenstand eine stationäre Stromversorgung zum vollständigen Aufladen der Batterie 81 aufzusuchen.

Das Energiebereitstellungssystem für mobile und für stationäre Gegenstände gemäß Figur 1 weist einen äußeren und einen inneren Windkanal 1 auf, wobei der äußere Windkanal 1 beidseitig einen Windkanaldeckel 5 aufweist, welcher jeweils eine Revisionsöffnung verschließt. Ferner weist der äußere Windkanal 1 zwei Luftzufuhrschächte Front 23 für eine Fahrtwindaufnahme auf, welche jeweils mit einem Rost 24 und einem Staubfilter 25 vor einem Eindringen von Partikeln geschützt sind. Die zwei Luftzufuhrschächte Front 23 weisen jeweils eine Schleusenschranke 2 mit integriertem Luftwiderstandsmesser Schleusenschranke 3 auf, welcher den Luftwiderstand unmittelbar vor den Schleusenschranken 2 misst eine Offen- und Schließbewegung der Schleusenschranken 2 entlang eines Bewegungsradius Schleusenschranke 43 reguliert. Ein Schließen der Schleusenschranken 2 kann beispielsweise vorgesehen sein, wenn der Luftwiderstandsmesser Schleusenschranke 3 keinen oder unzureichenden Luftwiderstand misst, beispielsweise bei Stillstand des mobilen oder stationären Gegenstands und/oder unzureichendem Wind. Ein Schließen der Schleusenschranken 2 kann ebenfalls bei zu hohem Luftwiderstand ausgelöst werden, um die Komponenten des Energiebereitstellungssystems für mobile und für stationäre Gegenstände zu schützen. Sollte keine elektrische Energie zum Betrieb der Luftkompressionswand 37 und/oder kein Luftstrom zum Betrieb der Propellersysteme 19 zur Verfügung stehen, kann an die Ladeventile 26 eine externe Luftpumpe angeschlossen werden, welche elektrisch oder manuell betrieben werden kann, um die Propellersystem 19 anzutreiben.

Der äußere Windkanal 1 nimmt einen Teil des Windenergiesystems in Form von vier Propellersystemen 19 auf. Die vier Propellersysteme 19 können, durch einen in der Figur von links nach rechts gerichteten Luftstrom, in einem Generatorbetrieb betrieben werden und mittels zumindest einer mit dem Generator Energiebereitstellungssystem für mobile und für stationäre Gegenstände 10 verbundenen Welle elektrische Energie erzeugen. Die vier Propellersysteme 19 können aber auch in einem Motorbetrieb betrieben werden. Hierfür sind sie richtungsveränderlich ausgebildet und können ihre Ausrichtung um zumindest 180° verändern. Sodann können die vier Propellersysteme 19 mittels jeweils eines Motors Propellersystem 4 (Zusatzkomponente für Motorbetrieb) einen Luftstrom erzeugen, welcher über einen Schadstofffilter 18, eine Verbindungsschleuse Windkanal-Anlage zur CO₂-Filterung 16, eine Anlage zur CO₂-Filterung 17 auf einen darin integrierten Luftabzug 16 gerichtet ist, wobei der Luftstrom zwei weitere im Generatorbetrieb befindlichen Propellersysteme 19 passiert. Ferner sind eine Anlage zur Verarbeitung von CO₂ zu E-Fuel 15 und ein E-Fuel-Tank 48 vorgesehen. Zur Regulierung der Strömungsrichtung des Luftstroms weist der Windkanal 1 entsprechende Leitstrukturen auf, beispielsweise in Form eines Prellblechs. Kopplungsscharniere 14 verbinden die Propellersysteme 19 mit einer Komprimierungswelle 13, welche der ersten mechanischen Welle des Komprimierungs- und Verstärkersystems entspricht. In den Kopplungsscharnieren 14 sind Getriebe Komprimierungswelle 45 installiert, über welche die Komprimierungswelle 13 betrieben wird. Die Komprimierungswelle 13 wird durch die einzelnen Propellersysteme 19 betrieben und bündelt die mechanische Leistung der einzelnen Propellersysteme 19. Durch die Nutzung der Komprimierungswelle 13 kann die Leistung des gesamten Propellersystems erhöht werden. Ein Verteilergetriebeadapter Komprimierungswelle 12 ist an das Ende der Komprimierungswelle 13 angeschlossen. Im Verteilergetriebeadapter Komprimierungswelle 12 ist ein Getriebe Leistungsverstärker 44 installiert, auf das die Bewegung der Komprimierungswelle 13 übertragen wird. Das Getriebe Leistungsverstärker 44 ist an separate Verstärkerwellen 11 angeschlossen, über die dem Generator Energiebereitstellungssystem für mobile und für stationäre Gegenstände 10 mechanische Leistung zugeführt wird. Die Verstärkerwellen 11 entsprechen den zweiten mechanischen Wellen des Komprimierungs- und Verstärkersystems.

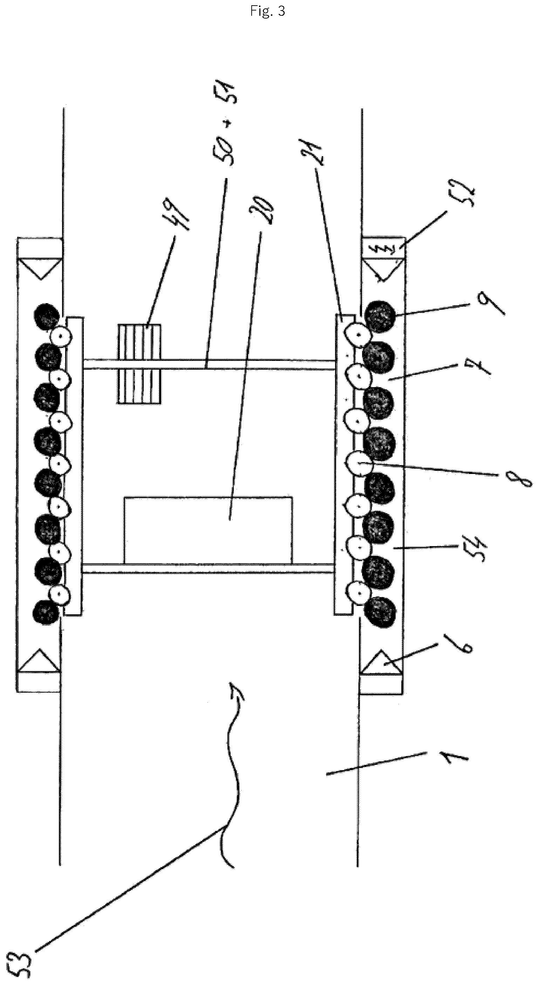

Der innere Windkanal 1 nimmt einen weiteren Teil des Windenergiesystems in Form von vier Segelinduktionssystemen auf. Entsprechend der Ausführungsform gemäß Figur 1 weist jedes Segelinduktionssystem zwei ausgefahrene bewegliche Segel 20 auf, wobei die Segel vorteilhafterweise versetzt, beispielsweise nebeneinander oder übereinander, angeordnet sind, sodass ein Luftstrom eine vorzugsweise identische Windlast auf beide Segel ausüben kann. Beweglich meint hierbei, dass ein Segel (teilweise) ein- und ausfahrbar und/oder höhenverstellbar und/oder formveränderlich und/oder richtungsveränderlich ist. Das Segel 20 kann dreieckig, viereckig oder anders geformt sein. Das Segel 20 kann aus synthetischen oder natürlichen Fasern, Metall oder jedem anderen im Wesentlichen windundurchlässigen Material gebildet sein. Um das Segel 20 bei hoher Windlast zu entlasten, kann das Segel 20 winddurchlässige Komponenten aufweisen. Jeweils eine Magnetkammer 7 weist drei Magnete 6 auf, welche den induzierenden Elementen entsprechen. Innerhalb jeder Magnetkammer 7 sind eine Vielzahl von Induktionsrollen 9 ortsfest aber beweglich gelagert, welche den induktiven Elementen entsprechen. Auf den Induktionsrollen 9 und mit diesen wirkverbunden sind Antriebsrollen 8 beweglich gelagert, welche mittels eines Verbindungselements Segel-Antriebsrollen 21 mit den Segeln 20 wirkverbunden sind. Beispielsweise kann das Verbindungselement Segel-Antriebsrollen 21 mittels eines oder mehrerer Antriebsgewinde mit den Antriebsrollen 8 verbunden sein. Antriebsrollen 8, Verbindungselement Segel-Antriebsrollen 21 und Segel 20 bilden eine Art Segelwagenkonstruktion. Ein Luftstrom im Windkanal 1 übt eine Windlast auf die Segel 20 aus. Der auf die Segel 20 wirkende Druck überträgt sich auf das Verbindungselement Segel-Antriebsrollen 21, welches dazu veranlasst wird, eine Bewegung entlang des Luftstroms zu vollziehen, wobei sich die Antriebsrollen 8 in Rotation versetzen. Die Rotation der Antriebsrollen 8 versetzt die Induktionsrollen 9 in eine, je nach Profil, gegenläufige oder gleichläufige Bewegung/Rotation, wobei sowohl Antriebsrollen 8 als auch Induktionsrollen 9 zur besseren Bewegungsübertragung beispielsweise gummiert und/oder profiliert (Zahnrad- oder Kettenradprofil o.ä.) ausgeformt sein können. Der auf die Segel 20 wirkende Druck bewirkt somit eine Rotation der Induktionsrollen 9, ohne eine wesentliche Positionsänderung des Verbindungselements Segel-Antriebsrollen 21. Ein entsprechendes Segelinduktionssystem kann als stationäres Segelinduktionssystem bezeichnet werden, wobei eine entsprechende Ausführungsform in Figur 3 genauer dargestellt ist. Die Rotation der Induktionsrollen 9 erzeugt eine elektrische Spannung in der Magnetkammer 7, in der sie angeordnet sind. Jedes Segelinduktionssystem ist mittels einer Verbindung Segelinduktionssystem-Generator 22 mit dem Generator Energiebereitstellungssystem für mobile und für stationäre Gegenstände 10 elektrisch verbunden. Auch wenn das Ausführungsbeispiel ein rollenbasiertes Segelinduktionssystem offenbart, versteht sich, dass das Segelinduktionssystem das zumindest eine induzierende Element und/oder das zumindest eine induktive Elemente zweckmäßig auch anderweitig in Bewegung versetzen kann, beispielsweise mittels Zahnräder, Zahnstangen, Antriebsgewinde o.ä.

Die Bewegung der Antriebsrollen 8 und/oder Induktionsrollen 9 des Segelinduktionssystems können gleichermaßen dafür genutzt werden, mechanische Energie bereitzustellen. Hierbei können die Antriebsrollen 8 und/oder Induktionsrollen 9 mit mechanischen Wellen verbunden sein, welche mit einem elektrischen Generator wirkverbunden sind, sodass die Erzeugung elektrischer Energie mittels Induktion der Bereitstellung mechanischer Energie nachgelagert erfolgt. Die mechanische Energie kann aber auch genutzt werden, um mechanische Komponenten der Energiebereitstellungssystem für mobile und für stationäre Gegenstände und oder der mobilen oder stationären Gegenstände anzutreiben.

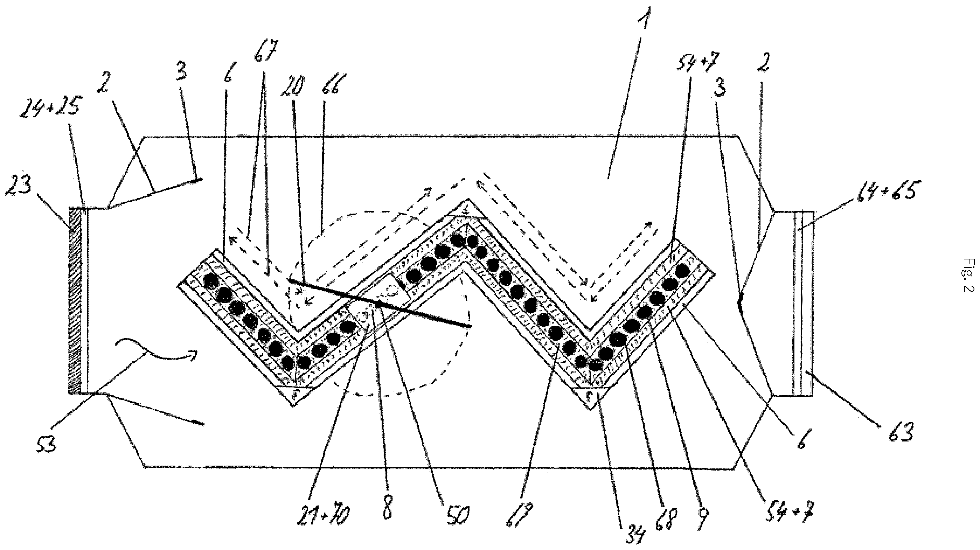

Figur 2 zeigt eine weitere Ausführungsform des Segelinduktionssystems, welches als mobiles Segelinduktionssystem bezeichnet werden kann, wobei die Bezugszeichen aus Figur 1 hier sowie in allen weiteren Figuren gelten. Entsprechend der Ausführungsform gemäß Figur 2 weist das Segelinduktionssystem eine Führschiene Segelinduktionssystem 69 auf. Die Führschiene Segelinduktionssystem 69 kann beispielsweise eine Laufrollenführung, Profilschienenführung, Käfigschienenführung o.ä. aufweisen. Die Führschiene Segelinduktionssystem 69 kann formveränderlich ausgebildet sein, und somit beispielsweise zwischen einer zickzackförmigen Führung und einer linearen Führung wechseln, wobei Einschlagswinkel eines Zick-Zacks einer zickzackförmigen Führung einstellbar sein können, beispielsweise in Abhängigkeit der Intensität des Luftstroms. Ein äußerer Bereich der Führschiene Segelinduktionssystem 69 wird beidseitig durch eine Vielzahl von Magneten 6 gebildet, welche in einem weiter innen liegenden Bereich der Führschiene Segelinduktionssystem 69 eine Magnetkammer 7 mit Magnetfeld 54 bilden, wobei das Magnetfeld 54 durch Magnetfeldverstärker 34 verstärkt wird. Ein zentraler Bereich der Führschiene Segelinduktionssystem 69 weist die auf Halterungen Induktionsrollen 68 beweglich gelagerten Induktionsrollen 9 auf. Die Induktionsrollen 9 sind mittels der Antriebsrollen 8 über das Verbindungselement Segel-Antriebsrollen 21 mit dem Segel 20 wirkverbunden. Das Verbindungselement Segel-Antriebsrollen 21 weist ferner eine Steuerungselektronik Segelinduktionssystem 70 auf, welche dafür eingerichtet ist, die Form und/oder die Ausrichtung des Segels 20 zu steuern, wobei das Segel 20 zumindest um eine Halterung Segel 50 entlang eines Bewegungsradius Segel 66 schwenkbar ist. Trifft ein Luftstrom mit einer Bewegungsrichtung Luftstrom 53 auf das Segel 20, bewegt sich das Verbindungselement Segel-Antriebsrollen 21 durch die Windlast auf Segel 20 mittels der Antriebsrollen 8 auf den Induktionsrollen 9 entlang einer von zwei Bewegungsrichtungen Segelinduktionssystem 67. Eine Bewegung der Antriebsrollen 8 bewirkt eine Bewegung der Induktionsrollen 9. Die Bewegung der Induktionsrollen 9 erzeugt eine elektrische Spannung in der Magnetkammer 7, in der sie angeordnet sind. Während einer Bewegung des Verbindungselement Segel-Antriebsrollen 21 in Richtung der Bewegungsrichtung Luftstrom 53 ist die Führschiene Segelinduktionssystem 69 vorzugsweise linear ausgebildet, um eine schnelle Bewegung der Induktionsrollen 9 hervorzurufen. Während einer Bewegung des Verbindungselement Segel-Antriebsrollen 21 entgegen der Bewegungsrichtung Luftstrom 53 kann die Führschiene Segelinduktionssystem 69 zickzackförmig angeordnet sein, um ein Kreuzen des Verbindungselements Segel-Antriebsrollen 21 im Gegenwind zu ermöglichen. Hierfür wird das Segel 20 mittels der Steuerungselektronik Segelinduktionssystem 70 automatisiert kontinuierlich oder seriell in seiner Ausrichtung verändert. Die Segelwagenkonstruktion (Antriebsrollen 8, Verbindungselement Segel-Antriebsrollen 21 und Segel 20) bewegt sich auf der Führschiene Segelinduktionssystem 69 hin und her. Vorteilhafterweise ist dies unabhängig von der Bewegungsrichtung Luftstrom 53, d.h. die Ausführungsform des Segelinduktionssystems gemäß Figur 2 ist für zumindest zwei Bewegungsrichtungen des mobilen oder stationären Gegenstands funktional. Der Luftstrom verlässt den Windkanal 1 über den Luftzufuhrschacht Heck für Fahrtwindaufnahme 63, welcher einen Rost 64 und einen Staubfilter 65 aufweist. Der Luftzufuhrschacht Heck 63 kann auch zur Aufnahme des Luftstroms bei umgekehrter Bewegungsrichtung des mobilen oder stationären Gegenstands dienen. Der Windkanal 1 ist demnach mehrwegig ausgebildet.

Figur 3 zeigt eine Ausführungsform eines stationären Segelinduktionssystems. Entsprechend der Ausführungsform gemäß Figur 3 weist das Segelinduktionssystem zwei Segel 20 auf, wobei eine davon, Segel 49, eingefahren ist. Die Segelwagenkonstruktion (Antriebsrollen 8, Verbindungselement Segel-Antriebsrollen 21 und Segel 20) ist im Windkanal 1 angeordnet.

Entsprechend eines PKW sind die Antriebsrollen 8 mit einem Antriebsgewinde ausgestattet, welches horizontal gegenüberliegende Reihen von Antriebsrollen 8 (bzw. gegenüberliegende Antriebsrollen 8) miteinander verbindet. Figur 3 stellt dementsprechend zumindest vier Reihen von Antriebsrollen 8 dar. Verbindungselement Segel-Antriebsrollen 21 ist über das oder die Antriebsgewinde mit den Antriebsrollen 8 verbunden. Sofern ein Luftstrom gegen das Segel 20 drückt, schiebt es die Segelwagenkonstruktion in die Bewegungsrichtung des Luftstroms 53 und versetzt die Antriebsrollen 8 in Rotation/Bewegung. Da die Antriebsrollen 8 auf den Induktionsrollen 9 aufliegen, resultiert dies in einer gegenläufigen Rotation/Bewegung der Induktionsrollen 9. Wenigstens die Bewegung der Induktionsrollen 9 erzeugt eine elektrische Spannung in der Magnetkammer 7, in der sie angeordnet sind, welche einen elektromagnetischen Konverter 52 aufweisen kann. Antriebsrollen 8 und Induktionsrollen 9 können gleichermaßen als Kugeln ausgebildet sein. Vorteilhafterweise weist die Segelwagenkonstruktion sowohl zumindest einen zuschaltbaren Vorwärts- als auch zumindest einen zuschaltbaren Rückwärtsgang auf, um bewegungsrichtungsvariabel zu sein und ein Blockieren der Antriebsrollen 8 zu verhindern. Soll die Segelwagenkonstruktion nicht aktiv sein, kann ein Leerlauf oder ein Feststellgang vorgesehen sein. Die beschriebene Segelwagenkonstruktion ist doppelt an gegenüberliegenden Seiten des Windkanals 1 ausgeführt, um einen Halt des Segelinduktionssystems im Windkanal 1 zu verbessern und einen Gewinn an elektrischer Leistung zu erhöhen. Die beiden Segelwagenkonstruktionen sind über zumindest ein Verbindungselement Segelinduktionssystem 51, welches gleichzeitig die Halterung Segel 50 sein kann, verbunden. Das zumindest eine Verbindungselement Segelinduktionssystem 51 kann ein Federelement aufweisen, um einen Bewegungsumfang der Segelwagenkonstruktion(en) auf den Induktionsrollen 9 zu vergrößern, indem eine definierte vertikale Bewegung zugelassen wird. Das Verbindungselement Segel-Antriebsrollen 21 kann, in einer abgewandelten Ausführungsform, auch magnetisch sein, um den Halt des Segelinduktionssystems im Windkanal über einen Magnetschwebebahneffekt (ergänzend) zu erreichen und/oder um das Magnetfeld 54 in der Induktionskammer 7 zu verstärken. In das oder in die Antriebsgewinde bzw. in das Verbindungselement Segel-Antriebsrollen 21 kann ein elektronisch steuerbares Mehrganggetriebe (Mehrgangvorwärts- und Mehrgangrückwärtsgetriebe) integriert werden, um eine Bewegungsintensität der Antriebsrollen 8 und damit mittelbar bzw. unmittelbar auch die Stärke der Induktion zu regulieren. Speziell bei der Ausführungsform mit Mehrganggetriebe kann, wie auch im Propellersystem mit Motor, ein kleiner Motor in die Segelwagenkonstruktion integriert werden, über den das oder die Antriebsgewinde angetrieben wird/werden, um Phasen, in denen dem Windkanal 1 über die Windklappen kein oder nur ein geringer Luftstrom zugeführt wird, zu überbrücken und/oder um in Phasen, in denen das Luftpumpsystem temporär weniger Luftstrom bereitstellt, eine Leistungsunterstützung durch das Segelinduktionssystem zu erhalten, um die Leistung des Energiebereitstellungssystems für mobile und für stationäre Gegenstände allgemein zu steigern und/oder um zumindest einer Einrichtung des Energiebereitstellungssystems für mobile und für stationäre Gegenstände (temporär) Leistung bereitzustellen.

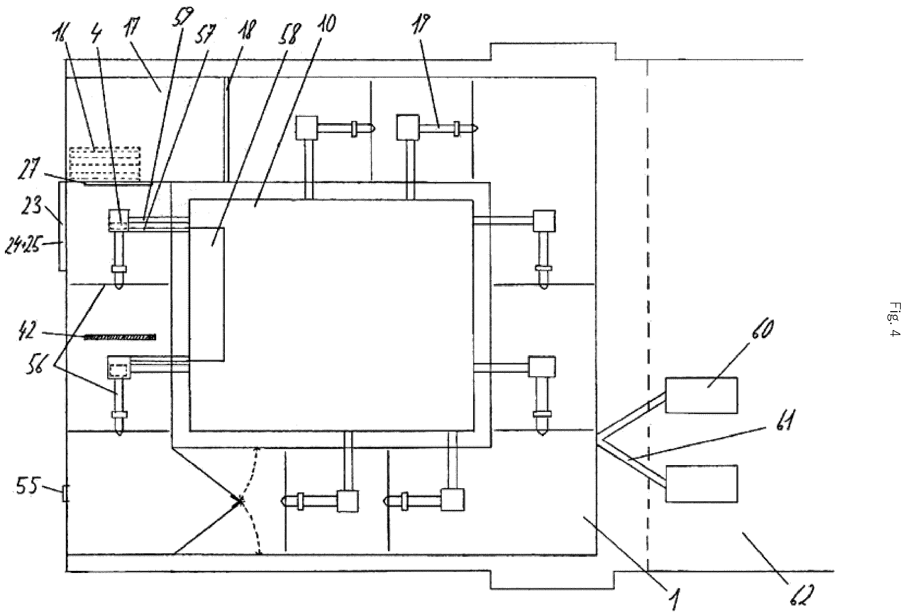

Figur 4 zeigt ein Ausführungsbeispiel des Energiebereitstellungssystems für mobile und für stationäre Gegenstände mit einer Vorrichtung zur manuellen Aktivierung des zumindest einen Luftpumpsystems und/oder des zumindest einen Windenergiesystems, wobei die Vorrichtung zur manuellen Aktivierung als eine in einer Fahrgastkabine 60 angeordnete Pedalvorrichtung 60 ausgebildet ist, welche über eine Vorrichtung zur Übertragung der mechanischen Leistung auf das Propellersystem manuell 61, zumindest mit den zwei Propellersystemen manuell 56 wirkverbunden ist. Die durch die Pedalvorrichtung 60 bereitgestellte mechanische Leistung wird an die Propellersysteme manuell 56 weitergegeben, wodurch die Propellersysteme 56 manuell aktiviert und in Betrieb gehalten werden. Diese erzeugen, parallel zu dem Fahrtwind, welcher mittels des Luftzufuhrschacht Front für Fahrtwindaufnahme 23 den Propellersystemen Standard 19 zugeführt wird, den Luftstrom, der für die Aktivierung und den Betrieb der Propellersysteme Standard 19 erforderlich ist. Die Propellersysteme manuell 56 haben ergänzend einen Motor Propellersystem 4, der zugeschaltet werden kann und der mittels einer Verbindung Motor Propellersystem-Generator Propellersystem 57 über einen separaten Generator Propellersystem 58 mit Leistung versorgt werden kann. Der Motor Propellersystem 4 bezweckt, die Aktivität der Propellersysteme manuell 56 bei nicht-manuell-Betrieb in Aktivität zu bringen und zu halten, so dass diese einen Luftstrom im Windkanal 1 für die Propellersysteme Standard 19 erzeugen. Der Generator Propellersystem 58 ist an den Generator Energiebereitstellungssystem für mobile und für stationäre Gegenstände 10 gekoppelt. Der Generator Energiebereitstellungssystem für mobile und für stationäre Gegenstände 10 wird durch die Propellersysteme manuell 56 und durch die Propellersysteme Standard 19 mit Leistung versorgt. Das Energiebereitstellungssystem für mobile und für stationäre Gegenstände hat außerdem ein Ladeventil Windkanal 55, an das eine externe Luftpumpvorrichtung angeschlossen werden kann, über die die Propellersysteme Standard 19 temporär betrieben werden können, die so wiederum die Generatoren 10, 58 betreiben und die Batterie 81 aufladen. Ein Luftpumpsystem ist über den Propellersystemen manuell 56 angeordnet, und stellt diesen über zwei Luftzufuhrklappen 27, 42 einen Luftstrom bereit. Vorteilhafterweise führen die Luftzufuhrklappen 27, 42 von oben schräg aus der Luftkompressionskammer 39 in den Windkanal 1, mit Ausrichtung Richtung Propellersysteme Standard 19. Die schräge Anbringung der Luftzufuhrklappen 27, 42 hat gegenüber einer senkrechten Anbringung den Vorteil, dass der Luftstrom aus der Luftkompressionskammer 39 direkt fließend in den Luftstrom, der aus dem Fahrtwind und den Propellersystemen manuell 56 resultiert, übergehen kann, anstatt mit diesem Luftstrom zunächst zu kollidieren. Über die Luftzufuhrklappen 27, 42 wird je wechselweise Luft aus der Luftkompressionskammer 39 in den Windkanal 1 gepumpt. Das Luftpumpsystem kann bei Bedarf zugeschaltet werden. Das Luftpumpsystem ist an den Generator Energiebereitstellungssystem für mobile und für stationäre Gegenstände 10 angeschlossen.

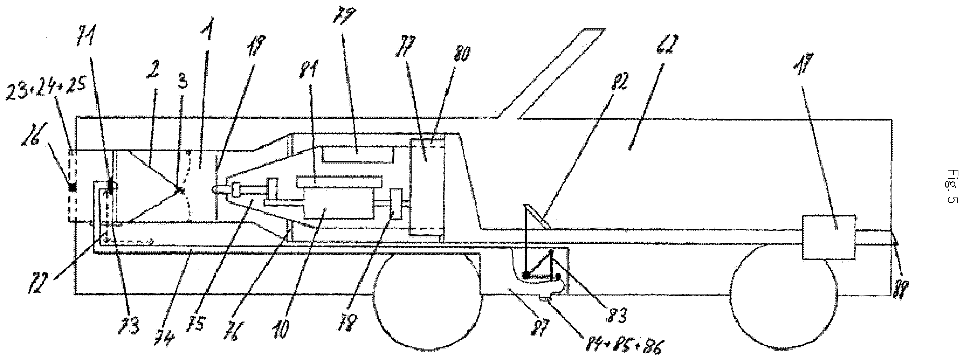

Figur 5 zeigt eine Seitenansicht eines Ausführungsbeispiels des Energiebereitstellungssystems für mobile und für stationäre Gegenstände mit einer Vorrichtung zur manuellen Aktivierung des zumindest einen Luftpumpsystems und/oder des zumindest einen Windenergiesystems. Die Vorrichtung zur manuellen Aktivierung ist gebildet aus einer Vorrichtung zur manuellen Aktivierung der Luftpumpe 87 in Form von Pedalen 82. Ein Druck auf die Pedale 82 bewirkt mittels einer Vorrichtung zur Übertragung der mechanischen Leistung auf die Luftpumpe 83 einen Luftstrom aus der Luftpumpe 87 über den Windkanal Luftpumpe 74 in Richtung des Propellersystems 19. Während einer Rückstellung der Pedalte 82 wird Luft über einen Lufteinzug Luftpumpe 84, welcher einen Rost Lufteinzug Luftpumpe 86 und einen Staubfilter 85 aufweist, in die Luftpumpe 87 eingesogen. Die Vorrichtung zur manuellen Aktivierung des zumindest einen Luftpumpsystems und/oder des zumindest einen Windenergiesystems ist mittels einer Zuschaltklappe 73 entlang einer Justierrichtung 72 an einem am Einlass den Windkanals 1 angeordneten Ladeventils 71 elektrisch zuschaltbar. Der durch die Luftpumpe manuell durch den Nutzer durch die Aktivierung der Tretvorrichtung erzeugte Luftstrom aktiviert das Windenergiesystem, hier das Propellersystem 19 in der Maschinenkammer 75, welche mittels Befestigungen Maschinenkammer 76 im Innenbereich des Energiebereitstellungssystems für mobile und für stationäre Gegenstände angeordnet und gehaltert ist. Das Windenergiesystem stellt die Leistung für den Generator Energiebereitstellungssystem für mobile und für stationäre Gegenstände 10 bereit. Die Luft verlässt den Windkanal 1 durch die Luftabzugsklappe 88.

Gemäß eines anderen Ausführungsbeispiels kann die Luftpumpe 87 auch das Luftpumpsystem sein. Wenn die Luftpumpe 87 das Luftpumpsystem ist, werden, ähnlich der Vorrichtung zur Übertragung der mechanischen Leistung auf das Propellersystem manuell 61 in Figur 5, die Luftkompressionswände 37 der Luftkompressionskammern 39 durch die mechanische Leistung, die durch die Tretbewegung durch den Nutzer erzeugt wird, betrieben. Das Luftpumpsystem stellt den Luftstrom für die Aktivierung und den Betrieb des Windenergiesystems bereit.

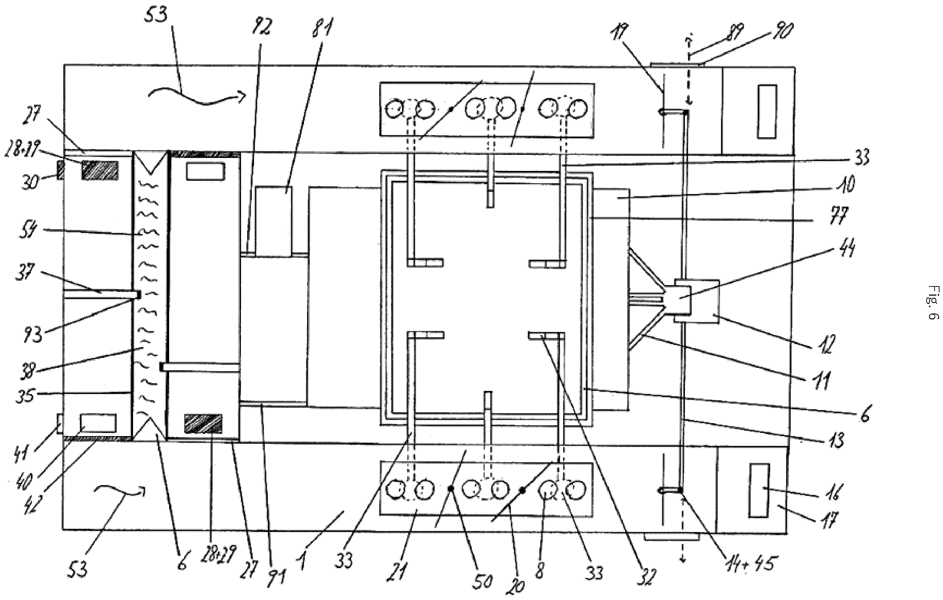

Figur 6 zeigt das erfindungsgemäße Energiebereitstellungssystem für mobile und für stationäre Gegenstände, wobei das Energiebereitstellungssystem als integraler Bestandteil des Induktionskreises eines Elektromotors ausgebildet ist. Ein Elektromotor ist ein Gerät, das elektrische Energie in mechanische Energie umwandelt. Er funktioniert nach dem Prinzip der elektromagnetischen Induktion, wobei die Wechselwirkung zwischen einem stromdurchflossenen Leiter und einem Magnetfeld eine Kraft erzeugt, die den Motor in Rotation versetzt. Zu den Hauptkomponenten eines Elektromotors gehören ein Stator (stationärer Teil mit Drahtspulen) und ein Rotor (rotierender Teil mit einer oder mehreren Drahtspulen). Wenn elektrische Energie durch die Spulen im Stator fließt, entsteht ein Magnetfeld, das mit dem Magnetfeld des Rotors interagiert und diesen in Rotation versetzt und somit elektrische in mechanische Energie wandelt. Die Aufgabe des erfindungsgemäßen Energiebereitstellungssystems ist es nunmehr, die besagte elektrische Energie bereitzustellen.

Hierfür weist das Energiebereitstellungssystem entsprechend der Ausführungsform gemäß Figur 6 ein Luftpumpsystem mit zwei Luftkompressionskammern 39 auf, welche alternierend betrieben werden. Das heißt, dass die jeweiligen Luftkompressionswände 37 entgegengesetzte Bewegungsrichtungen aufweisen, sodass eine Luftkompressionskammer 39 einen Luftstrom über die erste Luftzufuhrklappe 27 bereitstellt, während die zweite Luftkompressionskammer 39 einen Luftstrom über die zweite Luftzufuhrklappe 42 bereitstellt. Hierdurch wird auf beiden entsprechenden Seiten der Luftkompressionskammern 39 ein kontinuierlicher Luftstrom bereitgestellt, welche in einem Windkanal 1 entlang der Bewegungsrichtung Luftstrom 53 in Richtung jeweils eines Segelinduktionssystems und jeweils eines Propellersystems 19 getrieben wird. Jede der zwei Luftkompressionswände 37 weist ein induktives Element 93 auf, welches in einer gemeinsamen, zwischen den beiden Luftkompressionskammern 39 angeordneten Induktionskammer 38, eine elektrische Spannung erzeugt, welche mittels einer Verbindung Batterie - Luftpumpsystem 92 die Batterie 81 laden kann. Die für das Luftpumpsystem benötigte Energie kann mittels der Verbindung Generator Energiebereitstellungssystem für mobile und für stationäre Gegenstände - Luftpumpsystem 91 bereitgestellt werden.

Die zwei Segelinduktionssysteme, welche mittels des Luftpumpsystems mit einem kontinuierlichen Luftstrom beaufschlagt werden, treiben mit Antriebsrollen 8 jeweils drei Induktionsantriebsgewinde 33 an, welche mit Induktionsspulen 32 wirkverbunden sind. Deren Bewegung innerhalb des durch Magnet 6 erzeugten Magnetfelds generiert eine elektrische Spannung zum Betrieb des Motors Energiebereitstellungssystem für mobile und für stationäre Gegenstände 77.

Die zwei Propellersysteme 19, welche ebenfalls mittels des Luftpumpsystems mit einem kontinuierlichen Luftstrom beaufschlagt werden, sind mit einem gemeinsamen Komprimierungs- und Verstärkersystem verbunden, welches mittels des Generators Energiebereitstellungssystem für mobile und für stationäre Gegenstände 10 die Bewegungsenergie der Propellersysteme 19 in elektrische Energie wandelt. Zur Maximierung der Ausbeute elektrischer Energie sind die Propellersysteme 19 längenveränderlich, beispielsweise teleskopierbar, ausgeformt. Mittels der Ausfuhrklappen 90 können die Propellersysteme 19 entlang einer Justierrichtung Propellersystem ausfahrbar 89 den Innenraum des mobilen oder stationären Gegenstands verlassen, um so meteorologischen Wind und/oder Fahrtwind aufzunehmen. Darüber hinaus können die Propellersysteme 19 richtungsveränderlich ausgebildet sein, beispielsweise mittels Schwenkscharnieren, um Fahrtwind bei mehr als einer Fahrtrichtung aufnehmen zu können.

Sowohl das Luftpumpsystem, als auch die Segelinduktionssysteme, als auch die Propellersysteme 19 können, direkt und/oder indirekt, elektrische Energie zum Antrieb des Motors Energiebereitstellungssystem für mobile und für stationäre Gegenstände 77 bereitstellen.

**Bezugszeichen**

| | | | |
|---|---|---|---|
| 1. | Windkanal | 18. | Schadstofffilter |
| 2. | Schleusenschranke | 19. | Windenergiesystem/ Propellersystem |
| 3. | Luftwiderstandsmesser Schleusenschranke | | |
| | | 20. | Segel, ausgefahren, justierbar (Bestandteil Segelinduktionssystem) |
| 4. | Motor Propellersystem (Zusatzkomponente für Motorbetrieb) | | |
| | | 21. | Verbindungselement Segel-Antriebsrollen (Bestandteil Segelinduktionssystem) |
| 5. | Windkanaldeckel | | |
| 6. | Magnet | | |
| 7. | Magnetkammer | 22. | Verbindung Segelinduktionssystem-Generator |
| 8. | Antriebsrolle (Bestandteil Segelinduktionssystem) | | |
| | | 23. | Luftzufuhrschacht Front für Fahrtwindaufnahme |
| 9. | Induktionsrolle | | |
| 10. | Generator Energiebereitstellungssystem für mobile und für stationäre Gegenstände | 24. | Rost Luftzufuhrschacht Front für Fahrtwindaufnahme |
| | | 25. | Staubfilter Luftzufuhrschacht Front für Fahrtwindaufnahme |
| 11. | Verstärkerwelle | 26. | Ladeventil Luftzufuhrschacht Front für Fahrtwindaufnahme |
| 12. | Verteilergetriebeadapter Komprimierungswelle | | |
| | | 27. | Luftzufuhrklappe 1 (geschlossen) |
| 13. | Komprimierungswelle | 28. | Luftzufuhrschacht 1 (geöffnet) |
| 14. | Kopplungsscharnier | 29. | Verschlussklappe |
| 15. | Anlage zur Verarbeitung von CO₂ zu E-Fuel | | Luftzufuhrschacht 1 |
| | | 30. | Luftzufuhrschacht 2 (geöffnet) |
| 16. | Luftabzug (integriert in 17) | 31. | Ladeventil Luftzufuhrschacht 2 |
| 17. | Anlage zur CO₂-Filterung | 32. | Induktionsspule |
| 33. | Induktionsantriebsgewinde | | Segelinduktionssystem vielfach (Bestandteil Segelinduktionssystem) |
| 34. | Magnetfeldverstärker | | |
| 35. | Führschiene Luftkompressionswand | | |
| | | 52. | Elektromagnetischer Konverter |
| 36. | gezahntes Kugellager | 53. | Bewegungsrichtung Luftstrom |
| 37. | Luftkompressionswand | 54. | Magnetfeld |
| 38. | Induktionskammer | 55. | Ladeventil Windkanal |
| 39. | Luftkompressionskammer (Bestandteil Luftpumpsystem) | 56. | Propellersystem manuell |
| | | 57. | Verbindung Motor Propellersystem-Generator Propellersystem |
| 40. | Luftzufuhrschacht 3 (geschlossen) | | |
| 41. | Luftzufuhrschacht 4 (geschlossen) | 58. | Generator Propellersystem |
| 42. | Luftzufuhrklappe 2 (geöffnet) | 59. | Welle Propellersystem |
| 43. | Bewegungsradius Schleusenschranke | 60. | Vorrichtung zur manuellen Aktivierung des Propellersystems manuell (Pedale) |
| 44. | Getriebe Leistungsverstärker | | |
| 45. | Getriebe Komprimierungswelle | 61. | Vorrichtung zur Übertragung der mechanischen Leistung auf das Propellersystem manuell |
| 46. | Verbindungsschleuse Windkanal-Anlage zur CO₂-Filterung | | |
| 47. | Bewegungsrichtung Luftkompressionswand | 62. | Fahrgastkabine |
| | | 63. | Luftzufuhrschacht Heck für Fahrtwindaufnahme |
| 48. | E-Fuel-Tank | | |
| 49. | Segel, eingefahren, justierbar (Bestandteil Segelinduktionssystem) | 64. | Rost Luftzufuhrschacht Heck für Fahrtwindaufnahme |
| | | 65. | Staubfilter Luftzufuhrschacht Heck für Fahrtwindaufnahme |
| 50. | Halterung Segel (Bestandteil Segelinduktionssystem) | | |
| | | 66. | Bewegungsradius Segel |
| 51. | Verbindungselement | 67. | Bewegungsrichtung |
| | Segelinduktionssystem mobil | | Gegenstände |
| 68. | Halterung Induktionsrolle (Bestandteil Segelinduktionssystem) | 80. | Kühlbereich Motor Energiebereitstellungssystem für mobile und für stationäre Gegenstände |
| 69. | Führschiene Segelinduktionssystem mobil (Bestandteil Segelinduktionssystem) | | |
| | | 81. | Batterie |
| | | 82. | Vorrichtung zur manuellen Aktivierung der Luftpumpe (Pedale) |
| 70. | Steuerungselektronik Segelinduktionssystem mobil (Bestandteil Segelinduktionssystem) | | |
| | | 83. | Vorrichtung zur Übertragung der mechanischen Leistung auf die Luftpumpe |
| 71. | Ladeventil intern zuschaltbar | 84. | Lufteinzug Luftpumpe |
| 72. | Justierrichtung Ladeventil intern zuschaltbar | 85. | Staubfilter Lufteinzug Luftpumpe |
| | | 86. | Rost Lufteinzug Luftpumpe |
| 73. | Zuschaltklappe Ladeventil intern zuschaltbar | 87. | Luftpumpe |
| | | 88. | Luftabzugsklappe |
| 74. | Windkanal Luftpumpe | 89. | Justierrichtung Propellersystem |
| 75. | Maschinenkammer | | ausfahrbar |
| 76. | Befestigung Maschinenkammer | 90. | Ausfuhrklappe |
| 77. | Motor Energiebereitstellungssystem für mobile und für stationäre Gegenstände | 91. | Verbindung Generator Energiebereitstellungssystem für mobile und für stationäre Gegenstände - Luftpumpsystem |
| 78. | Transformator | 92. | Verbindung Batterie - Luftpumpsystem |
| 79. | Steuerungselektronik Energiebereitstellungssystem für mobile und für stationäre | | |
| | | 93. | induktives Element |

## Patentansprüche

1. Energiebereitstellungssystem für mobile und für stationäre Gegenstände aufweisend, zumindest ein Luftpumpsystem, zumindest ein Windenergiesystem und zumindest einen Windkanal, wobei das zumindest eine Luftpumpsystem fluidisch mit dem zumindest einen Windenergiesystem verbunden ist, wobei das zumindest eine Windenergiesystem innerhalb des zumindest einen Windkanals und/oder an dem zumindest einen Windkanal und/oder innerhalb des zumindest einen Luftpumpsystems und/oder an dem zumindest einen Luftpumpsystem angeordnet ist, und wobei das zumindest eine Windenergiesystem zumindest ein Segelinduktionssystem aufweist, das dafür eingerichtet ist, Windenergie aus zumindest einem Luftstrom in elektrische und/oder in mechanische Energie zu wandeln.

2. Energiebereitstellungssystem für mobile und für stationäre Gegenstände gemäß Anspruch 1, **dadurch gekennzeichnet, dass** das zumindest eine Segelinduktionssystem zumindest ein bewegliches Segel, zumindest ein induzierendes Element und/oder zumindest ein induktives Element aufweist, wobei das zumindest eine bewegliche Segel form- und/oder richtungsveränderlich mit dem zumindest einen induzierenden Element und/oder mit dem zumindest einen induktiven Element verbunden ist, derart, dass eine Form und/oder eine Ausrichtung des zumindest einen beweglichen Segels an dem zumindest einen Luftstrom ausrichtbar ist, derart, dass der zumindest eine Luftstrom eine Bewegung des zumindest einen induzierenden Elements und/oder des zumindest einen induktiven Elements bewirkt, wobei das zumindest eine induzierende Element und/oder das zumindest eine induktive Element mit dem jeweils korrespondierenden Element wirkverbunden ist, derart, dass die Bewegung des zumindest einen induzierenden Elements und/oder des zumindest einen induktiven Elements eine elektrische Spannung erzeugt.

3. Energiebereitstellungssystem für mobile und für stationäre Gegenstände gemäß Anspruch 2, **dadurch gekennzeichnet, dass** das zumindest eine Segelinduktionssystem als Führungssystem mit zumindest einer Führschiene ausgebildet ist, wobei das zumindest eine induzierende Element und/oder das zumindest eine induktive Element entlang der zumindest einen Führschiene beweglich mit dem Führungssystem verbunden ist/sind, wobei die zumindest eine Führschiene das jeweils korrespondierende Element aufweist.

4. Energiebereitstellungssystem für mobile und für stationäre Gegenstände gemäß Anspruch 3, **dadurch gekennzeichnet, dass** die zumindest eine Führschiene formveränderlich ist und wahlweise eine lineare oder eine zickzackförmige Führung ausbildet.

5. Energiebereitstellungssystem für mobile und für stationäre Gegenstände gemäß einem der vorhergehenden Ansprüche, ferner aufweisend zumindest eine Vorrichtung zur manuellen Aktivierung des zumindest einen Luftpumpsystems und/oder des zumindest einen Windenergiesystems, wobei die zumindest eine Vorrichtung zur manuellen Aktivierung fluidisch und/oder mechanisch mit dem zumindest einen Luftpumpsystem und/oder dem zumindest einen Windenergiesystem verbunden ist.

6. Energiebereitstellungssystem für mobile und für stationäre Gegenstände gemäß einem der vorhergehenden Ansprüche, ferner aufweisend zumindest ein Ladeventil zur manuellen und/oder zur automatischen Aktivierung des zumindest einen Windenergiesystems und/oder des zumindest einen Luftpumpsystems und/oder zumindest einer anderen Einrichtung des Energiebereitstellungssystems für mobile und für stationäre Gegenstände, wobei das Ladeventil dafür eingerichtet ist mit einer manuell und/oder maschinell betriebenen Vorrichtung zur Erzeugung eines Luftstroms verbunden zu werden.

7. Energiebereitstellungssystem für mobile und für stationäre Gegenstände gemäß einem der vorhergehenden Ansprüche, ferner aufweisend zumindest ein Komprimierungs- und Verstärkersystem, wobei das zumindest eine Komprimierungs- und Verstärkersystem mittels einer ersten mechanischen Welle mit dem zumindest einen Windenergiesystem wirkverbunden ist, wobei das Komprimierungs- und Verstärkersystem dafür eingerichtet ist, mechanische Energie der ersten mechanischen Welle auf zumindest zwei zweite mechanische Wellen zu übertragen, und wobei die zumindest zwei zweiten mechanischen Wellen mit zumindest einem Generator oder mit zumindest einer anderen Einrichtung des Energiebereitstellungssystems für mobile und für stationäre Gegenstände wirkverbunden sind.

8. Energiebereitstellungssystem für mobile und für stationäre Gegenstände gemäß einem der vorhergehenden Ansprüche, **dadurch gekennzeichnet, dass** der zumindest eine Windkanal zumindest eine zu öffnende und zu schließende Windklappe zur Aufnahme des zumindest einen Luftstroms aufweist, wobei die zumindest eine zu öffnende und zu schließende Windklappe fluidisch mit dem zumindest einen Windenergiesystem verbunden ist, und wobei der zumindest eine Windkanal einwegig oder mehrwegig ist.

9. Energiebereitstellungssystem für mobile und für stationäre Gegenstände gemäß einem der vorhergehenden Ansprüche, ferner aufweisend zumindest ein Luftstromregulationssystem, das dazu eingerichtet ist, den zumindest einen Luftstrom zu und/oder in dem zumindest einen Windenergiesystem und/oder zu und/oder in dem zumindest einen Luftpumpsystem und/oder in zumindest einem oder zu zumindest einem Bestandteil des Energiebereitstellungssystems für mobile und für stationäre Gegenstände zu regulieren.

10. Energiebereitstellungssystem für mobile und für stationäre Gegenstände gemäß einem der vorhergehenden Ansprüche, **dadurch gekennzeichnet, dass** das zumindest eine Luftpumpsystem zumindest ein Induktionssystem aufweist, wobei das zumindest eine Induktionssystem im oder an dem zumindest einen Luftpumpsystem angeordnet ist, und wobei die Bewegung zumindest eines Luft-komprimierenden Elements des zumindest einen Luftpumpsystem eine elektrische Spannung erzeugt.

11. Energiebereitstellungssystem für mobile und für stationäre Gegenstände gemäß Anspruch 9, ferner aufweisend zumindest einen Motor, wobei ein Induktionskreis des zumindest einen Motors durch das zumindest eine Segelinduktionssystem des zumindest einen Windenergiesystems und/oder durch das zumindest eine Induktionssystem des zumindest einen Luftpumpsystems und/oder durch zumindest ein Induktionssystem zumindest eines anderen Windenergiesystems bereitgestellt wird.

12. Energiebereitstellungssystem für mobile und für stationäre Gegenstände gemäß einem der vorhergehenden Ansprüche, ferner aufweisend zumindest eine Einrichtung zur Luftreinigung, wobei die zumindest eine Einrichtung zur Luftreinigung dafür eingerichtet ist, zumindest einen Schadstoff aus dem zumindest einen Luftstrom abzureichern.

13. Energiebereitstellungssystem für mobile und für stationäre Gegenstände gemäß Anspruch 11, **dadurch gekennzeichnet, dass** der zumindest eine Schadstoff CO₂ ist, wobei die zumindest eine Einrichtung zur Luftreinigung dafür eingerichtet ist, das abgereicherte CO₂ in konzentrierter Form zu speichern und freizugeben.

14. Energiebereitstellungssystem für mobile und für stationäre Gegenstände gemäß Anspruch 12, ferner aufweisend zumindest eine Einrichtung zur Herstellung von E-Fuel, wobei die zumindest eine Einrichtung zur Herstellung von E-Fuel zumindest einen Elektrolyseur zur Herstellung von H₂ aus Wasser und/oder einen H₂-Tank aufweist, wobei die zumindest eine Einrichtung zur Herstellung von E-Fuel dafür ausgebildet ist, das abgereicherte und konzentrierte CO₂ von der zumindest einen Einrichtung zur Luftreinigung zu empfangen, und wobei die zumindest eine Einrichtung zur Herstellung von E-Fuel dafür ausgebildet ist, zumindest einen E-Fuel aus H₂ und CO₂ zu synthetisieren.
